# EUROPEAN PATENT APPLICATION

(11) **EP 4 818 038 A1**
(43) Date of publication of application: **07.10.2026**
(21) Application number: 25167589.8
(22) Date of filing: 31.03.2025
(51) Int. Cl.: B64C 3/56, B64C 13/34, B64C 13/50, B64C 13/28

(54) **ACTUATION UNIT IN AN AIRCRAFT WING, METHOD OF ASSEMBLING AN ACTUATION UNIT, AIRCRAFT WING AND AIRCRAFT**

(71) Applicant: AIRBUS Operations GmbH, 21129 Hamburg (DE)
(72) Inventor: MARTENS, Marko, 21129 Hamburg (DE); OEHLMANN, Jan, 21129 Hamburg (DE)
(74) Representative: Isarpatent

(57) **Abstract**

The present invention provides an actuation unit (1) in an aircraft wing (201a, b) comprising two actuators (2a, b) driving a hinged lever (3) rotatably mounted in an attachment structure (4) with the attachment structure (2) having a base plate (16) and a first and a second flange (12a, b) each including a through hole (11a, b) and extend-ing vertically with respect to the base plate (16), with a receiving space (15) for receiving an end portion of the lever (3) formed between the flanges (12a, b) , wherein a tube (5) rotatably supported in the through holes (11a, b) extends through the flanges (12a, b) and the lever end and projects on both sides of the flanges (12a, b), wherein the tube (5) comprises on its outer circumferential surface (18) an outer structure (8a) engaged with the lever end for transmitting torque and on its inner circumferential surface an inner spline structure (7) engaged with an outer spline structure (14) of output shafts (6a, b) of the actuators (2a, b) attached on the outer surfaces (17, 19) of the flanges (12a, b), a method of assembling an actuation unit (1), an aircraft wing and an aircraft having such wing.

## Description

The present invention pertains to actuation unit in an aircraft wing, a method of assembling an actuation unit an aircraft wing and an aircraft having such wing.

Although it can be used in many applications, the present invention and the problems underlying it are explained in greater detail in relation to aircrafts. However, the devices and method described can likewise be used in vehicles in all sectors of the transport industry, e. g. for road vehicles, for rail vehicles or for watercraft or other installation environments.

There is a trend towards increasingly large passenger aircraft with higher performance efficiency (for example fuel burn reduction), for which it is desirable to have correspondingly large wing spans. However, the maximum aircraft span is effectively limited by airport operating rules which govern various clearances required when manoeuvring around the airport (such as the span and/or ground clearance required for gate entry and safe taxiway usage). To solve this problem, it is known to provide a passenger aircraft with foldable wings. The foldable wing typically comprises an inner region and an outer region, the outer region being moveable relative to the inner region between a) a flight configuration for use during flight, and b) a ground configuration for use during ground-based operations. In the ground configuration the outer region is moved (typically rotated) relative to the inner region such that the span of the wing is reduced. Thus, the aircraft can still adhere to airport operating rules yet benefit from the larger span in flight. Some systems are using tip actuation units that are mounted using two separate attachment brackets engaging with opposing ends of the actuator units thus disrupting the structural integrity of the attachment unit. These brackets require more space and are challenging to install in the limited space available in the aircraft wing.

Against this background, it is an object of the present invention to find an attachment configuration for an actuation unit allowing a more efficient use of available space and showing reduced complexity during assembly.

This object is achieved by an actuation unit in an aircraft wing having the features of claim 1, a method of assembling an actuation unit having the features of claim 8, an aircraft wing having the features of claim 13, and an aircraft having the features of claim 15.

According to a first aspect of the invention, an actuation unit in an aircraft wing comprising two actuators, also referred to as geared rotary actuators, driving a hinged lever rotatably mounted in an attachment structure is provided with the attachment structure having a base plate and a first and a second flange each including a through hole and extending vertically with respect to the base plate, with a receiving space for receiving a lever, in particular an end portion of the lever, formed between the flanges, wherein a tube rotatably supported in the through holes extends through the flanges and the lever end and projects on both sides of the flanges, wherein the tube comprises on its outer circumferential surface an outer structure engaged with the lever end for transmit-ting torque and on its inner circumferential surface an inner spline structure engaged with an outer spline structure of output shafts of the actuators attached on the outer surfaces of the flanges.

It is an idea of the invention to integrate a hinged lever between two rotary actuators, in particular plug-in type, geared rotary actuators attached to the same attachment structure to enable a double actuation. The plug-in type geared rotary actuators have an interface to the attachment structure and are provided in a way to have a combined output rotation on the same lever located between the actuators. The invention allows for installation and alignment of the output shafts of the actuators with respect to the lever, while keeping the lever axially positioned. Furthermore, the invention advantageously keeps the structural integrity of the commonly attachment structure while facilitating assembly of the unit.

A further aspect of the invention lies in a method of assembling an actuation unit according to the invention. The method comprising providing the attachment structure; attaching a first actuator on an outer surface of the first flange opposite of the inner surface; positioning the lever, in particular the lever end, in the receiving space; inserting the tube in the through holes of the flanges to extend through the flanges and the lever end and engaging with in the output shaft of the first actuator; aligning the output shaft of the second actuator to engage with the tube portion protruding from the second flange; and attaching the second actuator on an outer surface of the second flange. Using the attachment structure advantageously overcomes the problem of demanding alignment processes during assembly, increased structural stress, and complexity of the structure. Furthermore, a rigid and accurately positioned assembly structure ensures optimal force transmission minimizes mechanical stress and facilitates straightforward installation.

A further aspect of the invention lies in an aircraft wing having a fixed wing part and a wing tip foldable relative to the fixed wing part about a hinge axis. The actuation of the wing tip is established by means of at least one actuation unit of the invention. It is an idea of the invention to allow for the use of larger wingspan in flight, while the wing tip section can be folded up on the ground to comply with airport regulations by combining actuation and latching/locking into one system. Using the aircraft wing according to the invention therein results in an improved use of available space and reduced complexity in the assembly process.

A further aspect of the invention lies in an aircraft having an aircraft wing according to the invention. The wing consists of a fixed main section and a hinged wing-tip section that is driven by the actuation unit of the invention. This allows the wing tip to be fully deployed in flight for aerodynamic efficiency and folded on the ground to meet structural requirements and space constraints.

Advantageous embodiments and further developments are apparent from the further dependent claims and from the description with reference to the figures.

According to an embodiment of the actuation unit, projecting portions of the tube are inserted into the actuators. This configuration has the advantage of allowing for direct torque transmission from both actuators to the tube while maintaining axial alignment of the components. By extending into the actuators, the tube eliminates the need for additional coupling elements, thereby reducing assembly complexity, weight, and mechanical tolerances. The predefined interface between the tube and the actuators further simplifies installation and improves structural stability, ensuring efficient load distribution during operation.

According to an embodiment of the invention, the inner spline structure is configured as a female spline and the outer spline structure is configured as a male spline. This configuration ensures a precise and form-fitting torque transmission between the tube and the actuator output shafts. This configuration advantageously allows for secure engagement with minimal backlash, enhancing operational reliability and efficiency. The direct coupling of the splines facilitates assembly and disassembly, while ensuring optimized load distribution during actuation.

According to a further embodiment of the invention bushes inserted in the through holes are provided, with a first bush abutting an inner surface of the first flange and a second bush abutting an outer surface of the second flange. This allows for a proper and failsafe alignment during assembly.

According to a further embodiment of the invention, at least one washer is provided between the first bush and the outer structure. This configuration ensures precise axial positioning of the tube while minimizing friction and wear during rotation. The washer provides structural reinforcement at the contact points, reducing localized stress concentrations and enhancing the durability and stability of the actuation unit. Additionally, this arrangement facilitates smooth rotational movement of the tube while maintaining alignment and mechanical integrity within the attachment structure.

According to a further embodiment of the invention, the outer structure is configured as one of a spline structure and a form fit establishing structure, in particular a polygon structure, preferably a hexagon structure, engageable with a corresponding inner structure provided in the lever end. This configuration ensures secure and efficient torque transmission while preventing slippage. The form-fitting engagement allows for precise alignment, reducing backlash and mechanical wear. The form fit establishing structure, in particular configured as a form fit establishing structure, in particular a polygon structure, preferably a hexagon shape, supports torque transmission, facilitates high load-bearing capacity and simplifies assembly by enabling straightforward insertion and engagement without additional fastening elements.

According to a further embodiment of the invention, a through shaft connecting the first and second actuator is passed through the tube. This configuration ensures secure and efficient connection between the actuators and enable a double actuation.

According to a further embodiment of the method, before positioning the lever end in the receiving space, a first bush abutting to an inner surface of the first flange facing the receiving space is inserted in the through hole of the first flange and a washer is positioned between the first bush and the outer structure to reduce friction and maintain precise axial positioning. The washer may therein also act as a spacer, minimizing direct contact between the elements, thereby enhancing smooth rotational movement, and reducing mechanical stress on the components. Additionally, this arrangement facilitates simplified assembly while maintaining the structural integrity and durability of the actuation unit.

According to a further embodiment of the method before aligning the second rotary actuator with the tube portion a second bush abutting an outer surface of the second flange is inserted in the through hole of the second flange. This configuration ensures precise axial positioning of the tube while reducing friction and wear during operation. The bush provides structural reinforcement, minimizing localized stress concentrations and ensuring smooth rotational movement of the tube. Additionally, this arrangement facilitates accurate alignment of the second rotary actuator, simplifying assembly and enhancing the mechanical stability and durability of the actuation unit.

According to a further embodiment of the method, before aligning the output shaft of the second rotary actuator a through shaft connecting the first and second rotary actuator is inserted in the tube. This embodiment ensures precise alignment of both actuators while enabling synchronized torque transmission. The through shaft provides mechanical coupling between the actuators, reducing misalignment risks and ensuring balanced load distribution. Additionally, this arrangement facilitates efficient force transfer, minimizes mechanical wear, and simplifies assembly by allowing the second actuator to be aligned and installed without additional adjustments.

According to a further embodiment the method comprises connecting the actuation unit in an aircraft wing by connecting the base plate to a structure of the aircraft wing. This configuration ensures a rigid and stable mounting interface, providing precise alignment of the actuation unit within the wing structure. The secure attachment minimizes mechanical stress and vibrations, enhancing the durability and reliability of the system. Additionally, integrating the actuation unit directly into the wing structure optimizes space utilization and facilitates assembly of the wing structure and ensures efficient force transmission for reliable wing tip actuation.

According to a further embodiment of the aircraft wing, the base plate is attached to a structure of the fixed wing part extending perpendicular to a longitudinal axis of the aircraft wing. This configuration ensures a rigid and stable attachment, providing precise positioning of the actuation unit relative to the wing structure. The perpendicular alignment optimizes load distribution and force transmission, minimizing structural stress and enhancing the mechanical integrity of the assembly. Additionally, this arrangement simplifies installation while ensuring consistent and reliable actuation of the wing tip.

The invention will be explained in greater detail with reference to exemplary embodiments depicted in the drawings as appended.
- Fig. 1: depicts an explodes perspective view of an actuation unit according to an embodiment of the invention; and
- Fig. 2: depicts a schematic view of an aircraft comprising the actuation unit according to an embodiment of the invention; and
- Fig. 3: depicts a flow chart of the method of assembling an actuation unit according to an embodiment of the invention.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the detailed description. The elements of the drawings are not necessarily to scale relative to each other. In the figures, like reference numerals denote like or functionally like components, unless indicated otherwise.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

In the figures of the drawings, identical elements, features, and components that have the same function, and the same effect are each given the same reference signs, unless otherwise specified.

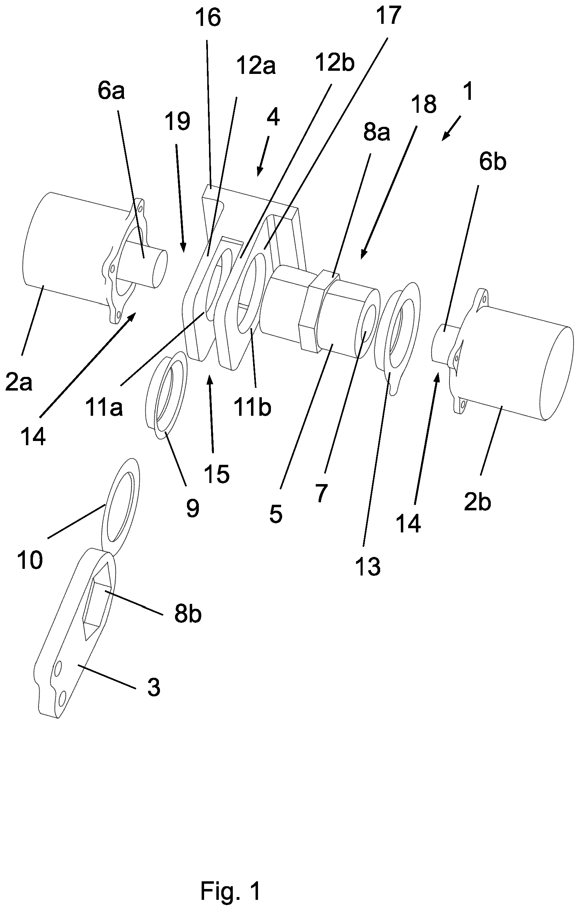

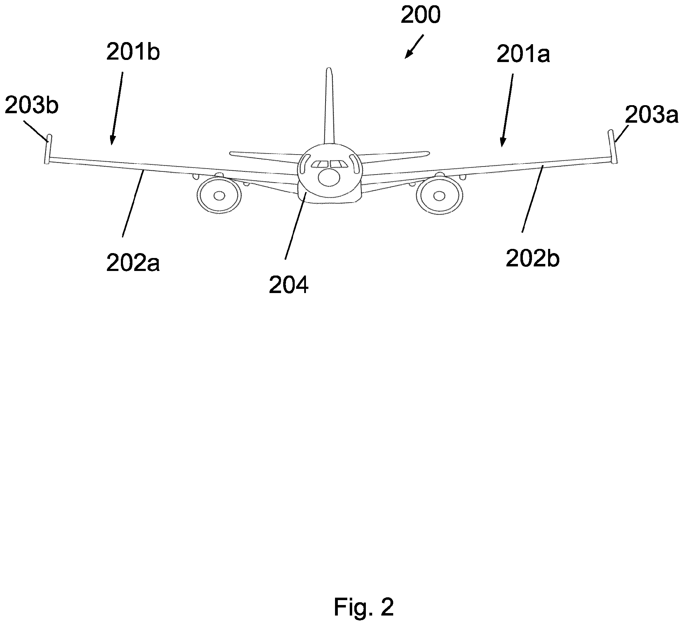

Fig. 1 depicts an exploded perspective view of an actuation unit 1 in a wing structure according to an embodiment of the invention. The actuation unit 1 comprises a two geared rotary actuators 2a, b providing rotational actuation to a hinged lever 3 attached to the unit. The attachment structure 4 serves as a structural mounting interface for securing the actuators 2a, b and supporting the hinged connection with the lever 3. In the mounted condition the tube 5 extends through the attachment structure 4 and the lever 3, transmitting torque and engaging with the actuator output shafts 6a, b via an inner spline structure 7. The tube 5 further comprises an outer structure 8a, configured as hexagon structure, on the outer circumferential surface 18, which is in positive engagement with a corresponding inner structure 8b in the lever 3 to ensure efficient torque transmission without slippage. The actuation unit 1 further comprises a first bush 9 configured as a fixed bush, which is inserted into the through hole 11a of a first flange 12a of the attachment structure 4 to provide axial positioning and minimize mechanical wear. A second bush 13, configured as a removable bush is provided to facilitate controlled disassembly and maintenance of the unit 1 and is inserted in the through hole 11b of the second flange 12b. A washer 10 is positioned between the lever 3 and the fixed first bush 9 to ensure precise axial positioning and to minimize friction between moving components. The lever 3 is the hinged component that transmits the actuation force to the foldable wing tip 203a, b, with its inner structure 8b engaging with the outer structure 8a of the tube 5 to enable direct torque transfer. The output shafts 6a, b of the rotary actuators 2a, b are provided with an outer spline structure 14, namely a male spline, which engages with the inner spline structure 7, configured as a female spline, of the tube 5, thereby ensuring a form-fitting and efficient torque transmission between the actuators 2a, b and the tube 5. This configuration enables synchronized actuation of the lever 3, ensuring precise movement of the wing tip 203a, b (cf. Fig. 2). The actuators 2a, b are connected by an actuator shaft (not shown) passed through the tube 5.

The assembly method of the actuation unit 1 involves several steps. First, the first actuator 2a is attached to an outer surface 19 of the first flange 2a, with the output shaft 6a extending in the through hole 11a of the first flange 12a. Next, a bush 9 is inserted into the through hole 11a of the first flange 12a to ensure proper positioning. Next, the tube 5 is inserted through the attachment structure 4, ensuring engagement with the inner spline structures 7 of the first rotary actuator 2a while also aligning its outer structure 8a, having a hexagon configuration in the embodiment of Fig. 1 without limiting the invention thereto, with the lever 3 provided with a corresponding inner structure 8b. The lever 5 is positioned within the receiving space 15 of the attachment structure 4 formed by the parallel aligned flanges 12a, b and engages with the outer structure 8a of the tube 5 during insertion. Thereby, the diameter of the through holes 11a, b is wider than the outer diameter of the tube to allow the tube 5 to pass through the flanges 12a, b of the attachment structure 4. Subsequently, the second bush 13 is inserted into the through hole 11b of the second flange 12b to facilitate alignment with the tube 5. Before inserting the tube 5 a washer 10 is placed between the first bush 9 and the outer structure 8a to reduce friction and maintain precise axial positioning. Following this, the second actuator 2b is attached on the outer surface 17 of the second flange 12b at the attachment structure 4, such that the output shafts 6a, b of the actuators 2a, b are aligned with and inserted into the tube 5 to enable efficient torque transmission. Finally, all components are securely fastened, ensuring that the actuation unit 1 is fully assembled and operational for integration into the wing structure. For installation in the wing structure of the fixed wing part 202a, b, the attachment structure comprises a base plate 16 extending vertically with respect to the flanges 12a, b, which is connectable to a structural part of the fixed wing part 202a, b to position the actuation unit 1 in close proximity to the foldable wing tip 203a, b.

Fig. 2 schematically depicts an aircraft 200 according to an embodiment of the invention. The aircraft 200 is provided with wings 201a, b. Each wing 201a, b comprises a fixed wing part 202a, b attached to the fuselage 204 and a foldable wing tip 203a, b. The foldable wing tip 203a, b is moveable relative to the fixed wing part 202a, b between a flight configuration for use during flight, and a ground configuration, as shown in Fig. 2, for use during ground-based operations. In the ground configuration the wings tip 203a, b are moved (typically rotated) relative to the fixed wing part 202a, b such that the span of the wings 201a, b is reduced. Thus, the aircraft 200 is able to adhere to airport operating rules yet benefit from the larger span in flight. An actuation unit 1 according to the invention is installed within each wing 201a, b and adapted to the spatial limitation within the wing design by reducing the number of elements, thus reducing space requirements and system complexity. This reduces weight and facilitates the assembly of the aircraft wings 201a, b.

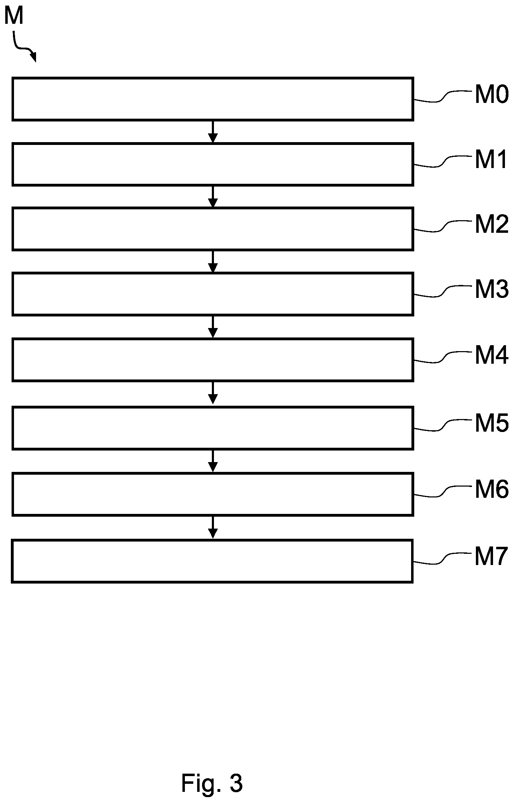

Fig. 3 depicts a flow chart of the method M of assembling an actuation unit 1 according to an embodiment of the invention The assembly method M of the actuation unit 1 involves several steps. In a first step M0, the first actuator 2a is attached to an outer surface 19 of the first flange 24, with the output shaft 6a extending in the through hole 11a of the first flange 12a. In step M1 a bush 9 is inserted into the through hole 11a of the first flange 12a to ensure proper positioning, while in step M2 the tube 5 is inserted through the attachment structure 4, ensuring engagement with the inner spline structures 7 of the first rotary actuator 2a while also aligning its outer structure 8a, with the lever 3 provided with a corresponding inner structure 8b. The lever 5 is positioned during step M2 within the receiving space 15 of the attachment structure 4 formed by the parallel aligned flanges 12a, b and engages with the outer structure 8a of the tube 5 during insertion. Thereby, the diameter of the through holes 11a, b is wider than the outer diameter of the tube to allow the tube 5 to pass through the flanges 12a, b of the attachment structure 4. In subsequently, M3 the second bush 13 is inserted into the through hole 11b of the second flange 12b to facilitate alignment with the tube 5. Before inserting the tube 5, a washer 10 is placed between the first bush 9 and the outer structure 8a to reduce friction and maintain precise axial positioning placed in step M4. Following this, the second actuator 2b is attached on the outer surface 17 of the second flange 12b at the attachment structure 4 in step M5, such that the output shafts 6a, b of the actuators 2a, b are aligned with and inserted into the tube 5 to enable efficient torque transmission. Finally, all components are securely fastened, ensuring that the actuation unit 1 is fully assembled and operational for integration into the wing structure in step M6. For installation in the wing structure of the fixed wing part 202a, b, in step M7 the attachment structure comprises a base plate 16 extending vertically with respect to the flanges 12a, b, which is connectable to a structural part of the fixed wing part 202a, b to position the actuation unit 1 in close proximity to the foldable wing tip 203a, b.

In the foregoing detailed description, various features are grouped together in one or more examples or examples with the purpose of streamlining the disclosure. It is to be understood that the above description is intended to be illustrative, and not restrictive. It is intended to cover all alternatives, modifications, and equivalents. Many other examples will be apparent to one skilled in the art upon reviewing the above specification. The embodiments were chosen and described to best explain the principles of the invention and its practical applications, to thereby enable others skilled in the art to best utilize the invention and various embodiments with various modifications as are suited to the particular use contemplated.

### List of reference signs

- 1: actuation unit
- 2a, b: actuator
- 3: lever
- 4: attachment structure
- 5: tube
- 6a, b: output shaft
- 7: inner spline structure
- 8a: outer structure
- 8b: inner structure
- 9: first bush
- 10: washer
- 11a, b: through hole
- 12a, b: flange
- 13: second bush
- 14: outer spline structure
- 15: receiving space
- 16: base plate
- 17: outer surface
- 18: outer circumferential surface
- 19: outer surface
- 200: aircraft
- 201a, b: wing
- 202a, b: fixed wing part
- 203a, b: wing tip
- 204: fuselage
- M: method
- M0-M7: steps

## Claims

1. Actuation unit (1) in an aircraft wing (201a, b) comprising two actuators (2a, b) driving a hinged lever (3) rotatably mounted in an attachment structure (4) with the attachment structure (2) having a base plate (16) and a first and a second flange (12a, b) each including a through hole (11a, b) and extending vertically with respect to the base plate (16), with a receiving space (15) for receiving an end portion of the lever (3) formed between the flanges (12a, b) , wherein a tube (5) rotatably supported in the through holes (11a, b) extends through the flanges (12a, b) and the lever end and projects on both sides of the flanges (12a, b), wherein the tube (5) comprises on its outer circumferential surface (18) an outer structure (8a) engaged with the lever end for transmitting torque and on its inner circumferential surface an inner spline structure (7) engaged with an outer spline structure (14) of output shafts (6a, b) of the actuators (2a, b) attached on the outer surfaces (17, 19) of the flanges (12a, b).

2. Actuation unit (1) according to claim 1, wherein projecting portions of the tube (5) are inserted into the actuators (2a, b).

3. Actuation unit (1) according to claim 1 or 2, wherein the inner spline structure (7) is configured as a female spline and the outer spline structure (14) is configured as a male spline.

4. Actuation unit (1) according to any one of claims 1 to 3, wherein bushes (9, 13) inserted in the through holes (11a, b) are provided with a first bush (9) abutting an inner surface of the first flange (12a) and a second bush (13) abutting an outer surface of the second flange (12b).

5. Actuation unit (1) according to any one of claims 1 to 4, wherein at least one washer (10) is provided between the first bush (9) and the outer structure (8a) to reduce friction and maintain precise axial positioning.

6. Actuation unit (1) according to any one of claims 1 to 5, wherein the outer structure (8a) is configured as one of a spline structure and a form fit establishing structure, in particular a polygon structure, preferably a hexagon structure, engageable with a corresponding inner structure (8b) provided in the lever (3).

7. Actuation unit (1) according to any one of claims 1 to 6, wherein a through shaft connecting the first and second actuator (2a, b) is passed through the tube (5).

8. Method of assembling an actuation unit (1) according to any one of claims 1 to 7, comprising:
- providing the attachment structure (4);
- attaching a first actuator (2a, b) on an outer surface (19) of the first flange (12a) opposite of the inner surface;
- positioning the lever (3) in the receiving space (15);
- inserting the tube (5) in the through holes (11a, b) of the flanges (12a, b) to extend through the flanges (12a, b) and the lever (3) and engaging with the output shaft (6a) of the first rotary actuator (2a);
- aligning the output shaft (6b) of the second rotary actuator (2b) to engage with the tube portion protruding from the second flange (12b); and
- attaching the second actuator (2b) on an outer surface (17) of the second flange (12b).

9. Method according to claim 8, wherein before positioning the lever (3) in the receiving space (15), a first bush (9) abutting to an inner surface of the first flange (12a) facing the receiving space (15) is inserted in the through hole (11a) of the first flange (12a) and a washer (10) is positioned between the first bush (9) and outer structure (8a) to reduce friction and maintain precise axial positioning.

10. Method according to claim 8 or 9, wherein before aligning the second rotary actuator (1) with the tube portion a second bush (13) abutting an outer surface (17) of the second flange (12b) is inserted in the through hole (11b) of the second flange (12b).

11. Method according to any one of claims 8 to 10, wherein before aligning the output shaft (6b) of the second actuator (2b) a through shaft connecting the first and second actuator (2a, b) is inserted in the tube (5).

12. Method according to any one of claims 8 to 11, further comprising connecting the actuation unit (1) in an aircraft wing (201a, b) by connecting the base plate (16) to a structure of the aircraft wing (201a, b).

13. Aircraft wing (201a, b) comprising a fixed wing part (202a, b) and a wing tip (203a, b) foldable relative to the fixed wing part (202a, b) about a hinge axis by means of at least one actuation unit (1) according to any one of claims 1 to 7.

14. Aircraft wing (201a, b) according to claim 13, wherein the base plate (16) is attached to a structure of the fixed wing part (202a, b) extending perpendicular to a longitudinal axis of the aircraft wing (201a, b).

15. Aircraft (200) having an aircraft wing (201a, b) according to claim 13 or 14.
